# FASCICULE DE BREVET EUROPEEN

(11) **EP 4 402 053 B1**
(45) Date de publication et mention de la délivrance du brevet: **17.12.2025**
(21) Numéro de dépôt: 22789511.7
(22) Date de dépôt: 14.09.2022
(51) Int. Cl.: B64C 25/42, F16D 65/78

(54) **ECRAN THERMIQUE ET DISPOSITIF DE FREINAGE ASSOCIE**
HITZESCHILD UND DAZUGEHÖRIGE BREMSVORRICHTUNG
THERMAL SHIELD AND ASSOCIATED BRAKING DEVICE

(30) Priorité: 15.09.2021 FR 2109670
(43) Date de publication de la demande: 24.07.2024
(73) Titulaire: Safran Landing Systems, 78140 Vélizy-Villacoublay (FR)
(72) Inventeur: MOLINE, Sylvain, 77550 Moissy-Cramayel (FR); GIMENEZ, Johan, 77550 Moissy-Cramayel (FR); HEUDE, Sébastien, 77550 Moissy-Cramayel (FR)
(74) Mandataire: Cabinet Boettcher
(86) Numéro de dépôt international: PCT/EP2022/075564
(87) Numéro de publication internationale: WO 2023/041601

(56) Documents cités:
- US-A- 5 190 124
- US-A1- 2006 201 754
- US-A1- 2020 200 227
- AKBARPOUR SAHAR: "Enhanced Composite Joint Performance throught Interlacement of Metal Inserts", 18 May 2021 (2021-05-18), pages 1 - 35, XP093006903, Retrieved from the Internet <URL:http://www.diva-portal.org/smash/get/diva2:1555543/FULLTEXT01.pdf> [retrieved on 20221212]
- MIRABELLA L ET AL: "AN EXPERIMENTAL INVESTIGATION INTO THE USE OF INSERTS TO ENHANCE THE STATIC PERFORMANCE OF THIN COMPOSITE BOLTED LAP JOINTS", PROCEEDINGS OF ICCM-11, 18 July 1997 (1997-07-18), pages 1 - 10, XP093006899, Retrieved from the Internet <URL:http://www.iccm-central.org/Proceedings/ICCM11proceedings/papers/ICCM11_V6_17.pdf> [retrieved on 20221212]
- MERAM AHMET ET AL: "Experimental investigation of screwed joints capabilities for the CFRP composite laminates - ScienceDirect", COMPOSITES PART B: ENGINEERING, 1 November 2019 (2019-11-01), pages 1 - 21, XP093006506, Retrieved from the Internet <URL:https://www.sciencedirect.com/science/article/pii/S1359836819306122#fig3> [retrieved on 20221209]
- ANONYMOUS: "CarbonVision - SL-Version", 24 July 2019 (2019-07-24), pages 1 - 5, XP093006528, Retrieved from the Internet <URL:https://www.carbonvision.de/slversion> [retrieved on 20221209]
- ANONYMOUS: "How to Install a Helicoil That Won't Retract - Henkel Adhesives", 14 June 2018 (2018-06-14), pages 1 - 4, XP093006624, Retrieved from the Internet <URL:https://www.henkel-adhesives.com/de/en/applications/all-applications/product-application/install-helicoil.html> [retrieved on 20221209]
- CAMANHO P P ET AL: "Increasing the efficiency of composite single-shear lap joints using bonded inserts", COMPOSITES PART B, ELSEVIER, AMSTERDAM, NL, vol. 36, no. 5, 1 July 2005 (2005-07-01), pages 372 - 383, XP027846721, ISSN: 1359-8368, [retrieved on 20050701]

## Description

L'invention concerne un écran thermique pour un dispositif de freinage d'au moins une roue d'aéronef.

L'invention concerne également un dispositif de freinage d'au moins une roue d'aéronef comprenant un tel écran thermique.

### ARRIERE PLAN DE L'INVENTION

Une roue d'aéronef est généralement équipée d'un dispositif de freinage comportant des disques rotors, solidaires en rotation de la roue, et des disques stators, immobilisés en rotation vis-à-vis de la roue, les disques rotors et stators étant empilés alternativement sur un tube de couple et formant ainsi une pile de disques.

Le dispositif comporte en outre un support d'actionneurs, appelé généralement couronne, fixé à une extrémité du tube de couple au moyen de vis. La couronne présente des cavités dans lesquelles sont disposés des actionneurs de freinage équipés chacun d'un piston coulissant. De plus, la couronne comprend des canaux de circulation d'un fluide hydraulique sous pression pour pousser les différents pistons et ainsi exercer un effort général sur la pile de disques.

Le frottement des disques permet en conséquence de produire un effort de freinage. La pile de disques est donc parfois appelée puits de chaleur du fait qu'elle dissipe thermiquement l'énergie cinétique de la roue lors du freinage.

En conséquence, lors du freinage, le frottement des disques entraine un échauffement significatif du dispositif. Si les matériaux utilisés pour les différents éléments du dispositif résistent généralement bien à cet échauffement, il en est autrement pour le fluide hydraulique présent dans la couronne et les actionneurs. En effet, sous l'effet de la chaleur dégagée, le fluide hydraulique voit son efficacité se détériorer et sa durée de vie se réduire. Ceci oblige donc à changer le fluide hydraulique relativement fréquemment, augmentant de fait le temps d'immobilisation au sol de l'aéronef.

Le document US2006201754 A1 divulgue un écran thermique de l'état de 1a technique.

La problématique décrite ci-dessus est d'autant plus présente que la stratégie actuelle des transporteurs aériens consiste à augmenter le nombre d'atterrissages avant révision (en anglais on parle de LPO pour « Landing Per Overhaul ») ainsi que la capacité de charge des aéronefs. Or, pour augmenter la capacité de charge des aéronefs, il est nécessaire d'augmenter la masse des puits de chaleur et par conséquent d'accroitre l'échauffement produit lors de l'effort de freinage ce qui détériore encore plus rapidement la qualité du fluide hydraulique. Pour limiter les échanges thermiques entre la pile de disques et la couronne et ainsi mieux protéger le fluide hydraulique, une approche courante consiste à interposer un écran thermique en matériau thermiquement isolant entre le tube de couple et la couronne.

Afin de limiter davantage les échanges thermiques entre la pile de disques et la couronne, il a été envisagé par la présente demanderesse d'interposer, en plus de l'écran thermique principal précité, un écran thermique secondaire également en matériau thermiquement isolant entre l'écran thermique principal et le tube de couple.

Il a été envisagé que l'écran thermique secondaire soit en résine phénolique qui est un bon isolant thermique tout en permettant à l'écran thermique secondaire d'être de masse peu importante. Malheureusement, l'écran thermique secondaire a alors tendance à se déformer très rapidement au fur et à mesure de son utilisation.

### OBJET DE L'INVENTION

Un but de l'invention est de proposer un écran thermique secondaire qui se déforme moins facilement.

Un but de l'invention est de proposer un dispositif de freinage qui comporte un tel écran thermique.

### RESUME DE L'INVENTION

En vue de la réalisation de ce but, on propose un écran thermique pour dispositif de freinage d'au moins une roue d'aéronef, l'écran thermique étant destiné à être agencé entre un support d'actionneurs et un tube de couple dudit dispositif de freinage, l'écran thermique comprenant une platine en un matériau thermiquement isolant, la platine comprenant une pluralité d'ouvertures s'étendant de manière traversante entre deux faces principales de la platine.

Selon l'invention l'écran thermique comporte au moins un insert agencé au moins en partie à l'intérieur d'une des ouvertures, l'insert étant dans un matériau plus rigide que celui de la platine.

De la sorte, l'écran thermique intègre au niveau d'au moins l'une de ses ouvertures un insert qui vient renforcer ladite ouverture. En particulier l'insert améliore la tenue en compression de ladite ouverture.

Ceci est particulièrement avantageux du fait que les ouvertures sont les zones de l'écran thermique les plus sujettes aux déformations locales.

Ainsi, on réduit de manière simple un risque de déformation de l'écran thermique tout en pouvant choisir un matériau présentant de bonnes propriétés thermiquement isolant pour la platine (même si ledit matériau présente des propriétés mécaniques de rigidité moins intéressantes que celles d'autres matériaux).

Bien entendu la platine est en un matériau présentant de meilleures caractéristiques d'isolation thermique que celles du matériau de l'insert. La platine et l'insert sont donc dans des matériaux différents.

L' insert ne dépasse pas de l' ouverture et l'insert est dans un matériau plus rigide que celui de la platine, la platine étant en résine phénolique.

Optionnellement la platine comporte au moins deux ouvertures s'étendant de manière traversante entre deux faces principales de la platine, un insert étant agencé à l'intérieur de chacune des ouvertures, chaque insert ne dépassant pas de l'ouverture associé et étant dans un matériau plus rigide que celui de la platine. Optionnellement l'insert est entièrement agencé à l'intérieur de l'ouverture.

Optionnellement l'écran thermique comporte en outre au moins une couche de matériau thermiquement isolant agencée dans l'ouverture de sorte à venir recouvrir au moins partiellement au moins l'une des faces de l'insert. Optionnellement la couche de matériau thermiquement isolant est formée directement par une extension de la platine.

Optionnellement la couche de matériau thermiquement isolant est une pièce en matériau thermiquement isolant agencée dans l'ouverture.

Optionnellement au moins l'une des faces de l'insert s'étend dans un même plan que l'une des faces de la platine. Optionnellement l'insert a une épaisseur identique à celle de l'ouverture.

Optionnellement l'insert est conformé en une rondelle. Optionnellement l'insert est en métal.

L'invention concerne également un dispositif de freinage d'au moins une roue d'aéronef comprenant un tel écran thermique.

D'autres caractéristiques et avantages de l'invention ressortiront à la lecture de la description qui suit de modes de réalisation particuliers non limitatifs de l'invention.

### BREVE DESCRIPTION DES DESSINS

L'invention sera mieux comprise à la lumière de la description qui suit en référence aux figures annexées parmi lesquelles :
[Fig. 1] la figure 1 est une vue en coupe d'une partie du dispositif de freinage d'une roue d'aéronef selon un premier mode de réalisation particulier de l'invention,
[Fig. 2a] la figure 2a est une vue en perspective d'un écran thermique du dispositif illustré à la figure 1,
[Fig. 2b] la figure 2b est une vue agrandie d'une portion de l'écran thermique illustré à la figure 2a,
[Fig. 2c] la figure 2c est une vue en coupe schématique de la portion illustrée à la figure 2b,
[Fig. 3a] la figure 3a est une vue en perspective d'une portion d'un écran thermique d'un dispositif de freinage d'une roue d'aéronef selon un deuxième mode de réalisation particulier de l'invention,
[Fig. 3b] la figure 3b est une vue en coupe schématique de la portion illustrée à la figure 3a,
[Fig. 4a] la figure 4a est une vue en perspective d'une portion d'un écran thermique d'un dispositif de freinage d'une roue d'aéronef selon un troisième mode de réalisation particulier de l'invention,
[Fig. 4b] la figure 4b est une vue en coupe schématique de la portion illustrée à la figure 4a.

### DESCRIPTION DETAILLEE DE L'INVENTION

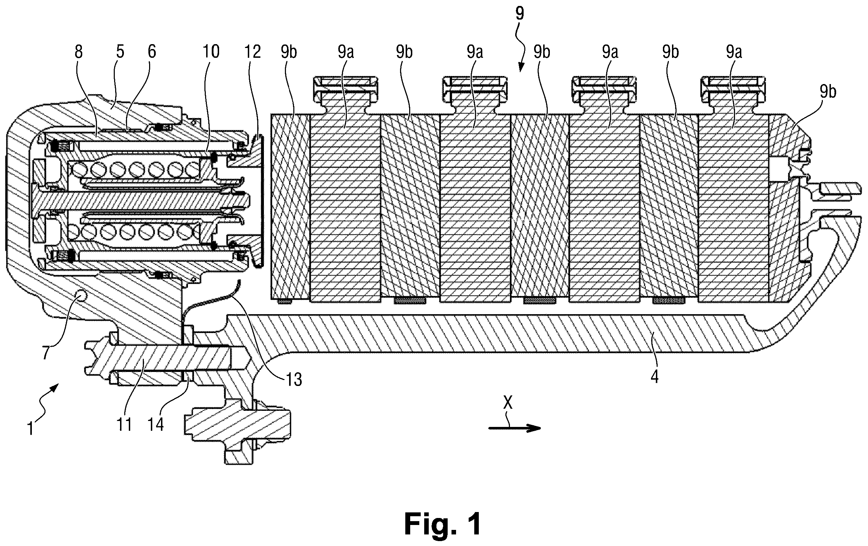

La figure 1 illustre un dispositif de freinage, généralement désigné en 1, d'une roue d'aéronef (non représentée) selon un premier mode de réalisation particulier de l'invention.

De façon connue en soi, le dispositif de freinage 1 comporte un puits de chaleur se présentant sous la forme d'une pile de disques 9 composée de disques rotors 9a et de disques stators 9b. Les disques rotors 9a et stators 9b sont empilés alternativement sur un tube de couple 4 du dispositif de freinage. La roue tourne ici selon un axe X de rotation, le tube de couple 4 s'étendant coaxialement audit axe X.

Le dispositif de freinage 1 comprend en outre un support d'actionneurs, parfois appelé couronne 5, fixé à une extrémité du tube de couple 4 au moyen de vis 11 de sorte à s'étendre également coaxialement à l'axe X. La couronne 5 comprend une pluralité de cavités 6 réparties de manière régulière autour de l'axe X et reliées entre elles par des canaux 7. Chacune des cavités accueille un actionneur 8 en mesure d'exercer un effort de freinage sur la pile de disque 9 via un fluide hydraulique sous pression circulant à l'intérieur de la couronne 5 à travers les canaux 7. Chaque actionneur 8 comprend un piston 10 coulissant selon un axe de coulissement parallèle à l'axe X. Le piston 10 est composé d'une tête 12 pour exercer une pression sur un premier disque stator 9b de la pile de disque 9. La répartition annulaire des actionneurs 8 permet de répartir uniformément l'effort de freinage sur l'ensemble de la surface du premier disque stator 9b.

Le dispositif de freinage 1 est bien connu de l'art antérieur et ne sera pas davantage détaillé dans le cas présent.

Le dispositif de freinage 1 comporte par ailleurs généralement un premier écran thermique 13 interposé entre le tube de couple 4 et la couronne 5 pour protéger ladite couronne du rayonnement thermique généré par le frottement des disques 9 lors du freinage de la roue.

Le premier écran thermique 13 est par exemple formé d'une pièce de tôle préférentiellement d'un seul tenant. Par exemple le premier écran thermique 13 a une épaisseur inférieure à 1 millimètre. Le premier écran thermique 13 est agencé dans le dispositif coaxialement à l'axe X. Le premier écran thermique 13 présente des orifices régulièrement répartis sur sa circonférence pour recevoir les vis 11 assurant la fixation de la couronne 5 à l'extrémité du tube de couple 4.

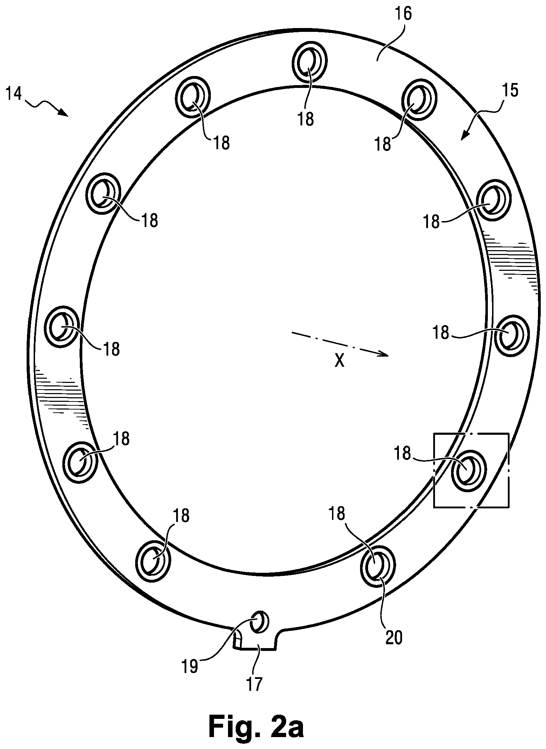

De préférence, et comme plus visible à la figure 2a, afin de renforcer la protection thermique de la couronne 5 de la conduction thermique générée par le frottement des disques 9 lors du freinage de la roue, le dispositif de freinage 1 comporte un deuxième écran thermique 14 interposé entre le premier écran thermique 13 et le tube de couple 4. Le deuxième écran thermique 14 est ainsi agencé dans le dispositif coaxialement à l'axe X.

Ledit deuxième écran thermique 14 comporte une platine 15. La platine 15 est de forme généralement annulaire. La platine 15 présente ainsi deux faces principales reliées par un bord interne et un bord externe. Les faces principales 15 sont ici généralement conformées chacune en une couronne. Plus précisément ici, la platine 15 présente une embase 16, conformée en un anneau, embase 16 à partir de laquelle une patte 17 s'étendant radialement. Mis à part au niveau de cette patte 17, la platine 15 dans son ensemble est conformée en un anneau elle-même et ses faces principales conformées chacune en couronne.

De préférence, la platine 15 est d'une épaisseur supérieure à celle du premier écran thermique 13. De préférence, la platine 15 reste de faible épaisseur. Par exemple la platine 15 a une épaisseur supérieure à 1 millimètre et inférieure à 10 millimètres.

Ladite platine 15 est préférentiellement formée d'une seule pièce.

Préférentiellement, ladite platine 15 est dans un matériau présentant de bonnes propriétés d'isolation thermique. La platine 15 est dans une résine phénolique. Mis à part au niveau de sa patte, la platine 15 présente des ouvertures 18 régulièrement réparties sur sa circonférence pour recevoir les vis 11 assurant la fixation de la couronne 5 à l'extrémité du tube de couple 4. En effet, au niveau de la patte 17, la platine 15 ne comporte pas une ouverture 18 ménagée dans son embase 16 (comme sur le reste de sa circonférence) mais un orifice 19 ménagé au niveau de la jonction entre la patte 17 et l'embase 16, l'orifice 19 permettant par exemple le passage d'un capteur tel qu'un capteur thermique comme par exemple une thermosonde.

Lesdites ouvertures 18 (de même que l'orifice 19) s'étendent toutes de manière à déboucher au niveau de chacune des deux faces principales de la platine 16.

La platine 16 comporte préférentiellement entre 8 et 15 ouvertures et par exemple entre 10 et 12 ouvertures.

Le deuxième écran thermique 14 étant coaxial à l'axe X, les différentes ouvertures 18 et l'orifice 19 de la platine 16 s'étendent parallèlement audit axe X.

Les différentes ouvertures 18 et l'orifice 19 ont ici tous une section circulaire.

Par ailleurs au moins une des ouvertures 18 du deuxième écran thermique 14 est munie d'un insert 20 agencé au moins en partie à l'intérieur de ladite ouverture 18.

Bien entendu cet insert 20 est percé d'un trou 21 pour laisser le passage de l'une des vis 11 à travers lui (et donc à travers le deuxième écran thermique 14). L'insert 20 et son ouverture 21 associée s'étendent coaxialement l'un à l'autre. En outre l'insert 20 (en place dans l'ouverture 18 associée) s'étend parallèlement à l'axe X. De préférence, toutes les ouvertures 18 du deuxième écran thermique 14 sont munies d'un insert 20 agencé au moins en partie à l'intérieur de l'ouverture 18 associée (un seul insert étant référencé à la figure 2a). Dans le cas présent, les différents inserts 20 sont identiques entre eux de sorte que la description qui suit de l'un des inserts 20 est également applicable aux autres inserts 20. Lorsque les deux écrans thermiques 13, 14 se retrouvent pincés entre le tube de couple 4 et la couronne 5, les efforts exercés par la couronne 5 sur le deuxième écran thermique 14 se trouvent sensiblement uniformément répartis sur une première des deux faces principales du deuxième écran thermique 14 du fait que la couronne 5 n'appuie pas directement sur le deuxième écran thermique 14 mais par l'intermédiaire du premier écran thermique 13. En revanche, les efforts exercés par le tube de couple 4 sur le deuxième écran thermique 14 ne sont pas aussi bien uniformément répartis du fait que le tube de couple 4 appuie directement sur le deuxième écran thermique 14 et ce uniquement au niveau des zones de la platine 15 intégrant les ouvertures 18 (et éventuellement l'orifice 19). Ceci engendre donc des contraintes importantes dans la platine 15 au niveau des ouvertures 18 : l'insert 20 permet astucieusement de rigidifier localement l'ouverture 18 associée pour éviter une déformation de celle-ci due aux contraintes subies.

On note que ce phénomène n'est pas aussi important au niveau de l'orifice 19 du deuxième écran thermique 14 de sorte que cet orifice 19 peut être muni d'un insert mais peut également ne pas être muni d'un insert.

L'insert 20 est dans un matériau plus rigide que celui de la platine 15. L'insert 20 est ainsi dans un matériau présentant un Module d'Young plus élevé que celui de la platine 15.

L'insert 20 présente de préférence un module d'Young très élevé. L'insert 20 est ainsi un insert rigide.

Par exemple l'insert 20 présente un Module d'Young supérieur à 50 GigaPascal (GPa) et de préférence supérieur à 60 GPa et de préférence supérieur à 65 GPa. L'insert 20 présente par exemple un Module d'Young compris entre 68 et 210 GPa.

A titre de comparaison, la platine 15 a un Module d'Young de préférence inférieur à 10 GPa et de préférence inférieur à 5 GPa. Par exemple la platine 15 a un Module d'Young compris entre 2.7 et 5 GPa.

Par exemple l'insert 20 est en ou à base de :
- d'au moins un métal et par exemple en ou à base de titane, de cuivre, d'acier (tel que de l'acier inoxydable ...), laiton ..., et/ou
- d'au moins un polymère et par exemple en ou à base de polyétheréthercétone (plus connu sous l'acronyme PEEK, marque déposée).

L'insert 20 est par exemple conformé en une rondelle. L'insert 20 présente ainsi deux faces principales en couronne raccordées par un unique bord interne et un unique bord externe.

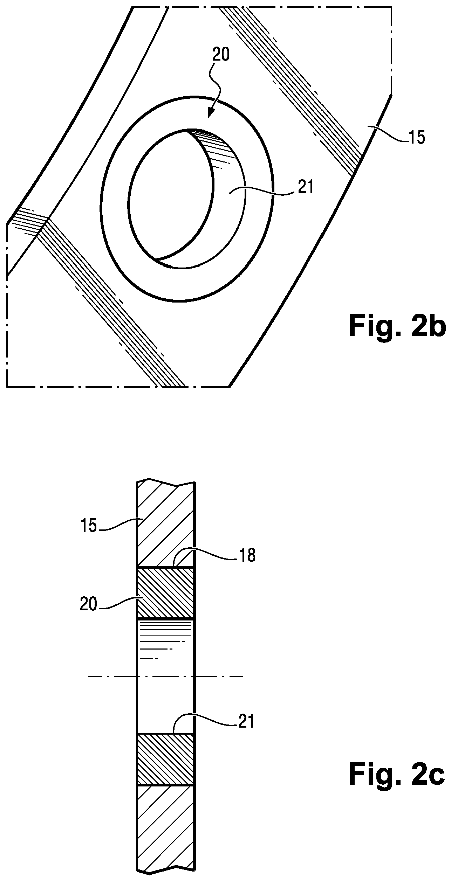

Dans le premier mode de réalisation, comme plus visible aux figures 2b et 2c, l'insert 20 est conformé de sorte à présenter une épaisseur (épaisseur considérée selon l'axe selon lequel s'étend l'insert 20 dans l'ouverture 18 associée soit un axe parallèle à l'axe X) égale à celle de la platine 15.

L'insert 20 s'étend ainsi dans l'ouverture 18 associée de sorte qu'au moins l'une de ses faces principales s'étende dans le même plan que l'une des faces principales de la platine 15 et de préférence que chacune de ses faces principales s'étendent dans le même plan que l'une respective des faces principales de la platine 15.

L'insert 20 ne dépasse donc pas de l'ouverture.

Ainsi il s'avère très simple d'agencer les inserts 20 dans le deuxième écran thermique 14 puisqu'il suffit d'introduire chaque insert 20 dans l'ouverture 18 associée de sorte que chaque insert 20 ne dépasse pas de la platine 15.

Au moins l'un des inserts 20 est par exemple entré en force dans l'ouverture 18 associée ou bien encore collé dans l'ouverture 18 associée.

Alternativement, au moins l'un des inserts 20 est par exemple placé dans un moule de fabrication de la platine 15 de sorte à se trouver moulé directement dans la platine 15 lors de la fabrication de cette dernière.

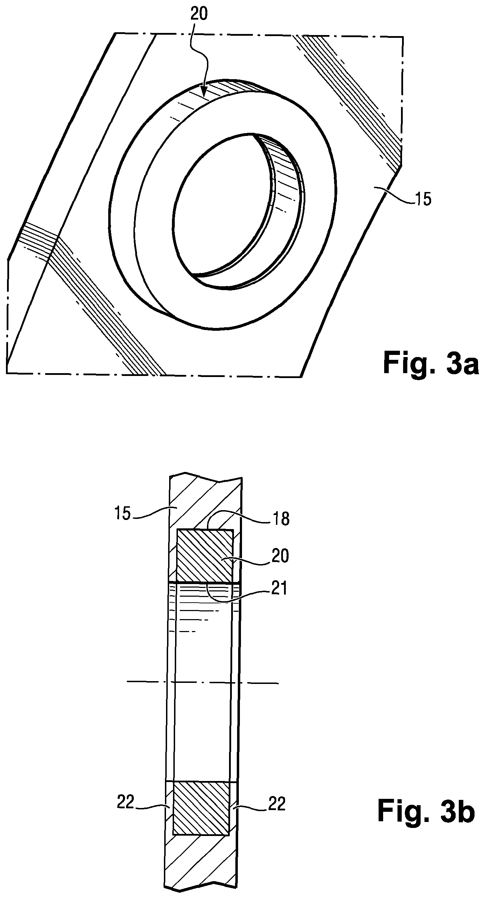

Dans tous les cas, ledit insert 20 est ainsi très bien solidarisé à la platine 15. En référence aux figures 3a et 3b, un deuxième mode de réalisation va être à présent décrit.

Ce deuxième mode de réalisation est identique au premier mode de réalisation mis à part au niveau des inserts 20 et des ouvertures 18 correspondantes du deuxième écran thermique 14.

Cependant là encore, au moins une des ouvertures 18 du deuxième écran thermique 14 est munie d'un insert 20 agencé au moins en partie à l'intérieur de ladite ouverture 18. De préférence, toutes les ouvertures 18 du deuxième écran thermique 14 sont munies d'un insert 20 agencé au moins en partie à l'intérieur de l'ouverture 18 associée. Dans le cas présent, les différents inserts 20 sont identiques entre eux de sorte que la description qui suit de l'un des inserts 20 est également applicable aux autres inserts 20. Bien entendu cet insert 20 est percé pour laisser le passage de l'une des vis 11 à travers lui (et donc à travers le deuxième écran thermique 14). L'insert 20 et son ouverture 18 associée s'étendent coaxialement l'un à l'autre. En outre l'insert 20 (en place dans l'ouverture associée 18) s'étend parallèlement à l'axe X.

L'insert 20 est dans un matériau plus rigide que celui de la platine 15. L'insert 20 est ainsi dans un matériau présentant un Module d'Young plus élevé que celui de la platine 15.

L'insert 20 présente de préférence un module d'Young très élevé. L'insert 20 est ainsi un insert rigide.

Par exemple l'insert 20 présente un Module d'Young supérieur à 50 GigaPascal (GPa) et de préférence supérieur à 60 GPa et de préférence supérieur à 65 GPa. L'insert 20 présente par exemple un Module d'Young compris entre 68 et 210 GPa.

A titre de comparaison, la platine 15 a un Module d'Young de préférence inférieur à 10 GPa et de préférence inférieur à 5 GPa. Par exemple la platine 15 a un Module d'Young compris entre 2.7 et 5 GPa.

Par exemple l'insert 20 est en ou à base de :
- d'au moins un métal et par exemple en ou à base de titane, de cuivre, d'acier (tel que de l'acier inoxydable ...), laiton ..., et/ou
- d'au moins un polymère et par exemple en ou à base de polyétheréthercétone (plus connu sous l'acronyme PEEK, marque déposée).

L'insert 20 est par exemple conformé en une rondelle. L'insert 20 présente ainsi deux faces principales en couronne raccordées par un unique bord interne et un unique bord externe.

Dans ce deuxième mode de réalisation, l'insert 20 est conformé de sorte à présenter une épaisseur (épaisseur considérée selon l'axe selon lequel s'étend l'insert 20 dans l'ouverture 18 associée soit un axe parallèle à l'axe X) inférieure à celle de la platine 15.

L'insert 20 s'étend ainsi entièrement à l'intérieur de l'ouverture 18 sans en dépasser.

Dans le cas présent, l'insert 20 ne dépasse d'aucune des deux faces principales de la platine 15.

Ceci permet d'avoir une meilleure isolation thermique entre le tube de couple 4 et le deuxième écran thermique 14 puisque le tube de couple 4 ne vient pas (ou peu) appuyer sur l'insert 20 contrairement au premier mode de réalisation. De préférence, la platine 15 vient recouvrir au moins partiellement l'une des faces principales de l'insert 20 lorsque celui-ci est en place dans l'ouverture 18 associée.

Par exemple la platine 15 vient recouvrir au moins partiellement chacune des faces principales de l'insert 20 lorsque celui-ci est en place dans l'ouverture 18 associée. A cet effet, alors que dans le premier mode de réalisation, le diamètre de l'ouverture 18 était le même sur tout le tronçon de l'ouverture 18, dans le deuxième mode de réalisation, le diamètre de l'ouverture 18 est ici différent au niveau de ses deux extrémités débouchant sur les faces principales de la platine 15.

Sur son tronçon central (comme dans le premier mode de réalisation), le diamètre de l'ouverture 18 est similaire (à plus ou moins 1%) ou égal au diamètre externe de l'insert 20.

En revanche sur ses deux tronçons d'extrémité, l'ouverture 18 présente un diamètre similaire (à plus ou moins 1%) ou égal à celui du trou central 21 de l'insert 20 à travers lequel s'étend la vis 11 en service.

De la sorte, l'insert 20 se trouve englobé dans la platine 15, au niveau des tronçons d'extrémité de l'ouverture 18 (d'un diamètre inférieur à celui du tronçon central de l'ouverture 18).

L'insert 20 est ainsi très bien solidarisé à la platine 15.

De façon avantageuse, les faces principales de l'insert 20 sont ainsi recouvertes chacune d'une couche thermiquement isolante 22 (i.e. couches formées directement par la platine 15) ce qui améliore encore davantage l'isolation thermique entre le tube de couple 4 et le deuxième écran thermique 14. En effet, le tube de couple 4 vient appuyer directement sur les couches thermiquement isolantes 22 de la platine 15 recouvrant l'insert 20.

Pour agencer l'insert dans la platine 15, l'insert 20 est par exemple placé dans un moule de fabrication de la platine 15 de sorte à se trouver moulé directement dans la platine 15 lors de la fabrication de cette dernière.

Selon une variante de ce deuxième mode de réalisation, pour au moins l'une des faces principales d'au moins l'un des inserts 20, lorsque celui-ci est en place dans l'ouverture 18 associée, la platine 15 ne vient pas recouvrir au moins partiellement ladite face principale. Il y a donc un espace laissé vide entre ladite face principale et la face principale la plus proche de la platine 15.

Par exemple, au moins l'un des inserts est par exemple placé dans un moule de fabrication de la platine 15 de sorte à se trouver moulé directement dans la platine 15 lors de la fabrication de cette dernière.

En variante au moins l'un des inserts 20 est entré en force dans l'ouverture 18 associée ou bien encore collé dans l'ouverture 18 associée.

Ledit insert 20 est ainsi très bien solidarisé à la platine 15.

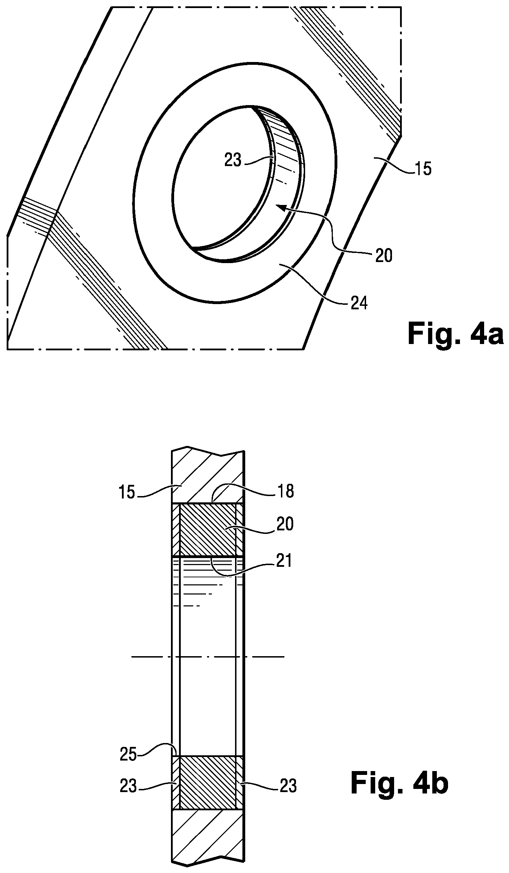

Quelle que soit la variante envisagée, on comprend donc que le deuxième mode de réalisation est identique au premier mode de réalisation mis à part au niveau de l'épaisseur des inserts 20 et, éventuellement, mis à part le diamètre et la forme des ouvertures 18 de la platine 15. En référence aux figures 4a et 4b, un troisième mode de réalisation va être à présent décrit.

Ce troisième mode de réalisation est identique au deuxième mode de réalisation mis à part au niveau des inserts 20. Cependant là encore, au moins une des ouvertures 18 du deuxième écran thermique 14 est munie d'un insert 20 agencé au moins en partie à l'intérieur de ladite ouverture 18. De préférence, toutes les ouvertures 18 du deuxième écran thermique 14 sont munies d'un insert 20 agencé au moins en partie à l'intérieur de l'ouverture 18 associée. Dans le cas présent, les différents inserts 20 sont identiques entre eux de sorte que la description qui suit de l'un des inserts 20 est également applicable aux autres inserts 20.

Bien entendu cet insert 20 est percé pour laisser le passage de l'une des vis 11 à travers lui (et donc à travers le deuxième écran thermique 14). L'insert 20 et son ouverture 18 associée s'étendent coaxialement l'un à l'autre. En outre l'insert 20 (en place dans l'ouverture associée) s'étend parallèlement à l'axe X.

L'insert 20 est dans un matériau plus rigide que celui de la platine 15. L'insert 20 est ainsi dans un matériau présentant un Module d'Young plus élevé que celui de la platine 15.

L'insert 20 présente de préférence un module d'Young très élevé. L'insert 20 est ainsi un insert 20 rigide.

Par exemple l'insert 20 présente un Module d'Young supérieur à 50 GigaPascal (GPa) et de préférence supérieur à 60 GPa et de préférence supérieur à 65 GPa. L'insert 20 présente par exemple un Module d'Young compris entre 68 et 210 GPa.

A titre de comparaison, la platine 15 a un Module d'Young de préférence inférieur à 10 GPa et de préférence inférieur à 5 GPa. Par exemple la platine 15 a un Module d'Young compris entre 2.7 et 5 GPa.

Par exemple l'insert 20 est en ou à base de :
- d'au moins un métal et par exemple en ou à base de titane, de cuivre, d'acier (tel que de l'acier inoxydable ...), laiton ..., et/ou
- d'au moins un polymère et par exemple en ou à base de polyétheréthercétone (plus connu sous l'acronyme PEEK, marque déposée).

L'insert 20 est par exemple conformé en une rondelle. L'insert 20 présente ainsi deux faces principales en couronne raccordées par un unique bord interne et un unique bord externe.

Dans ce troisième mode de réalisation, l'insert 20 est conformé de sorte à présenter une épaisseur (épaisseur considérée selon l'axe selon lequel s'étend l'insert dans l'ouverture 18 associée soit un axe parallèle à l'axe X) inférieure à celle de la platine 15.

L'insert 20 s'étend ainsi entièrement à l'intérieur de l'ouverture 18 sans en dépasser.

Dans le cas présent, l'insert 20 ne dépasse d'aucune des deux faces principales de la platine 15.

Ceci permet d'avoir une meilleure isolation thermique entre le tube de couple 4 et le deuxième écran thermique 14 puisque le tube de couple 4 ne vient pas (ou peu) appuyer sur l'insert 20 contrairement au premier mode de réalisation.

De préférence, le deuxième écran thermique 14 comporte au moins une pièce en matériau thermiquement isolant venant recouvrir au moins partiellement l'une des faces principales de l'insert 20 lorsque celui-ci est en place dans l'ouverture 18 associée.

Par exemple, le deuxième écran thermique 14 comporte une première pièce 23 en matériau thermiquement isolant venant recouvrir au moins partiellement la première face principale de l'insert 20 et une deuxième pièce 24 en matériau thermiquement isolant venant recouvrir au moins partiellement la deuxième face principale de l'insert 20. Les deux pièces 23, 24 étant identiques entre elles, la description qui suit de l'une d'entre elles (23) est également applicable à l'autre d'entre elles (24).

La pièce 23 est ainsi agencée au moins en partie à l'intérieur de l'ouverture 18 associée (l'insert 20 étant donc ici agencé entièrement dans l'ouverture 18 en étant bloqué de part et d'autre par les deux pièces 23, 24 associées) .

Bien entendu cette pièce 23 est percée d'un trou 25 pour laisser le passage de l'une des vis 11 à travers elle et donc à travers le deuxième écran thermique 14. De préférence, la pièce 23 est conformée de sorte que son trou 25 présente un diamètre identique à celui du trou 21 de l'insert 20.

La pièce 23 et son ouverture 18 associée s'étendent coaxialement l'une à l'autre. En outre la pièce 23 (en place dans l'ouverture 18 associée) s'étend parallèlement à l'axe X.

La pièce 23 est dans un matériau thermiquement isolant et par exemple en résine phénolique. Bien entendu la pièce 23 est dans un matériau présentant de meilleures propriétés d'isolation thermique que l'insert 20. L'insert 20 et la pièce 23 sont donc dans des matériaux différents.

La pièce 23 est par exemple conformée en une rondelle. La pièce 23 présente ainsi deux faces principales en couronne raccordées par un unique bord interne et un unique bord externe.

De préférence, la pièce 23 est conformée de sorte à présenter une épaisseur (épaisseur considérée selon l'axe selon lequel s'étend l'insert 20 dans l'ouverture 18 associée soit un axe parallèle à l'axe X) égale à la distance séparant la face principale de l'insert 20 en regard de ladite pièce 23 à la face principale correspondante de la platine 15.

La pièce 23 s'étend ainsi dans l'ouverture 18 de sorte qu'au moins :
- l'une de ses faces principales s'étende dans le même plan que l'une des faces principales de la platine 15, et/ou
- l'une de ses faces principales soit accolée à l'une des faces principales de l'insert 20.

La pièce 23 s'étend de préférence dans l'ouverture 18 de sorte que sa première face principale s'étende dans le même plan que l'une des faces principales de la platine 15 et que sa deuxième face principale soit accolée à l'une des faces principales de l'insert 20.

De la sorte, la pièce 23 comble l'espace séparant la face principale de l'insert 20 de la face principale de la platine 15 la plus proche.

La pièce 23 s'étend ainsi entièrement à l'intérieur de l'ouverture 18 sans en dépasser.

De la sorte, l'insert 20 se trouve dans la platine 15 encadré par les deux pièces.

De façon avantageuse, les faces principales de l'insert 20 sont ainsi recouvertes chacune d'une couche thermiquement isolante (i.e. couches formées par l'une des pièces 23, 24) ce qui améliore encore davantage l'isolation thermique entre le tube de couple 4 et le deuxième écran thermique 14. En effet, le tube de couple 4 vient appuyer directement sur les couches thermiquement isolantes de la platine 15 recouvrant l'insert 20.

Pour agencer l'insert 20 dans la platine 15, l'insert 20 est par exemple placé dans un moule de fabrication de la platine 15 de sorte à se trouver moulé directement dans la platine 15 lors de la fabrication de cette dernière. En variante, l'insert 20 est entré en force dans l'ouverture 18 associée ou bien encore collé dans l'ouverture 18 associée.

L'insert 20 est ainsi très bien solidarisé à la platine 15.

Puis les pièces 23, 24 sont à leur tour agencées dans l'ouverture 18 de part et d'autre de l'insert 20. Les pièces 23, 24 sont de préférence solidarisées à l'insert 20 (par exemple par collage) ou bien sont optionnellement simplement accolées à l'insert 20 sans y être solidarisées. Les pièces 23, 24 peuvent alternativement être solidarisées à l'insert 20 (par exemple par collage) afin que l'ensemble formé de l'insert et des pièces soit introduit dans l'ouverture 18 en une seule manœuvre.

Ceci permet d'assurer facilement une bonne isolation thermique entre le tube de couple 4 et la couronne 5 même au niveau des ouvertures 18 du deuxième écran thermique 14.

On comprend donc que le troisième mode de réalisation est identique au premier mode de réalisation mis à part au niveau de l'épaisseur des inserts 20 et de la présence additionnelle des pièces 23, 24.

Quel que soit le mode de réalisation envisagé, le deuxième écran thermique 14 permet de réduire les échanges thermiques (notamment les échanges thermiques par conduction) entre la couronne 5 et le tube de couple 4, qui est chauffé par le puit de chaleur, tout en présentant une bonne intégrité physique de par la présence des inserts 20 dans ses ouvertures 18.

Bien entendu l'invention n'est pas limitée aux modes de réalisation décrits et on peut y apporter des variantes sans sortir du cadre de l'invention tel que défini par les revendications.

Le dispositif de freinage décrit pourra ne pas comprendre de premier écran thermique mais seulement le deuxième écran thermique selon l'invention.

La platine pourra présenter une autre forme que celle décrite. Par exemple la platine pourra présenter une embase dépourvue de patte et par exemple une embase en un anneau, dépourvue de patte. La platine pourra ainsi être dans son ensemble conformée en un anneau elle-même et ses faces principales conformées chacune en couronne.

De manière indépendante de la forme de la platine (et notamment de manière indépendante de la présence d'une patte ou non), la platine pourra comporter en plus des ouvertures pour le passage des vis au moins un orifice pour le passage d'un capteur et par exemple au moins deux orifices. En remplacement, de manière indépendante de la forme de la platine (et notamment de manière indépendante de la présence d'une patte ou non), la platine pourra ne comporter que des ouvertures régulièrement réparties sur sa circonférence pour recevoir les vis (et aucun orifice pour le passage d'un capteur).

Bien que dans le deuxième mode de réalisation, les deux faces principales de l'insert soient recouvertes par la platine, seule l'une des faces principales de l'insert pourra être recouverte au moins partiellement par la platine. L'autre des faces pourra par exemple s'étendre dans le même plan que l'une des faces principales de la platine (comme dans le premier mode de réalisation) ou bien être associée à une pièce en matériau thermiquement isolant (comme dans le troisième mode de réalisation) ou bien pourra s'étendre à l'intérieur de l'ouverture sans élément pour combler l'espace avec la face principale de la platine associée.

Bien que dans le troisième mode de réalisation, les deux faces principales de l'insert soient recouvertes chacune d'une pièce en matériau thermiquement isolant, seule l'une des faces principales de l'insert pourra être recouverte au moins partiellement par une telle pièce. L'autre des faces pourra par exemple s'étendre dans le même plan que l'une des faces principales de la platine (comme dans le premier mode de réalisation) ou bien pourra s'étendre à l'intérieur de l'ouverture sans élément pour combler l'espace avec la face principale de la platine associée. Quel que soit le mode de réalisation envisagé, il est possible de recouvrir (au moins partiellement) au moins l'une des faces principales de l'insert d'une couche de matériau thermiquement isolant qui soit différente de ce qui a été indiqué comme par exemple une simple couche de revêtement en matériau thermiquement isolant. Ladite couche pourra ainsi être appliquée avant que l'insert ne soit agencé dans la platine ou bien une fois l'insert agencé dans la platine. Le revêtement en matériau thermiquement isolant pourra ainsi être une couche de résine, de peinture ... Bien entendu plusieurs pièces en matériau thermiquement isolant pourront être associées à la même face principale de l'insert. Le deuxième écran thermique pourra comporter au moins une autre pièce (qui ne soit pas nécessairement dans un matériau thermiquement isolant) comme par exemple une rondelle adhésive pour solidariser par exemple une pièce en matériau thermiquement isolant à l'insert.

On pourra envisager une variante du premier mode de réalisation dans laquelle l'épaisseur de l'insert soit inférieure à celui de l'ouverture associée sans qu'une couche de matériau thermiquement isolant (quelle qu'elle soit) ne vienne combler l'espace entre la face principale de la platine et la face principale de l'insert correspondant.

Au moins un insert et/ou une pièce pourra avoir une autre forme que celle décrite en rondelle. Par exemple au moins un insert et/ou une pièce pourra être conformé de sorte à présenter un bord externe présentant au moins deux flancs externes (et non un unique flanc comme dans les différents modes de réalisation décrits) et par exemple une succession de flancs externes. Au moins un insert et/ou une pièce pourra ainsi être conformé extérieurement en un écrou. De préférence alors l'ouverture associée présentera une section correspondante (et non une section circulaire comme dans les différents modes de réalisation décrits) pour faciliter l'accroche de l'insert et/ou de la pièce dans l'ouverture associée.

Alternativement ou en complément, et ce quelle que soit la forme d'au moins un insert (en rondelle ou non), l'insert et/ou l'ouverture associée pourra être conformé pour assurer le maintien de l'insert dans l'ouverture associé. Par exemple l'insert et/ou l'ouverture associée pourra comporter au moins une zone texturée (zone présentant au moins un picot, au moins une rainure (partielle ou totale), au moins une nervure (ajourée ou non ajourée), au moins un chevron, au moins un aspect rugueux, au moins un revêtement rugueux ... - la zone texturée pourra ainsi former un dessin comprenant au moins une droite s'étendant axialement, au moins un quadrillage, au moins une sinusoïde, au moins une signal triangulaire, au moins un signal rectangulaire, au moins un chevron ...) et/ou présentant un traitement de surface facilitant l'accroche de l'insert dans l'ouverture associée. Ladite zone pourra s'étendre sur toute la circonférence du bord externe de l'insert ou sur une partie seulement du bord externe de l'insert et/ou sur toute la longueur (selon la direction axiale de l'insert) dudit bord externe ou sur une partie seulement dudit bord externe. Alternativement ou en complément et ce quelle que soit la forme d'au moins une pièce (en rondelle ou non), la pièce et/ou l'ouverture associée pourra être conformée pour assurer le maintien de la pièce dans l'ouverture associée. Par exemple la pièce et/ou l'ouverture associée pourra comporter au moins une zone texturée (zone présentant au moins un picot, au moins une rainure (partielle ou totale), au moins une nervure (ajourée ou non ajourée), au moins un chevron, au moins un aspect rugueux, au moins un revêtement rugueux ... - la zone texturée pourra ainsi former un dessin comprenant au moins une droite s'étendant axialement, au moins un quadrillage, au moins une sinusoïde, au moins un signal triangulaire, au moins un signal rectangulaire, au moins un chevron ...) et/ou présentant un traitement de surface facilitant l'accroche de la pièce dans l'ouverture associée. Ladite zone pourra s'étendre sur toute la circonférence du bord externe de la pièce ou sur une partie seulement du bord externe de la pièce et/ou sur toute la longueur (selon la direction axiale de la pièce) dudit bord externe ou sur une partie seulement dudit bord externe.

Alternativement ou en complément le deuxième écran thermique pourra comporter d'autres moyens d'accroche de la pièce et/ou de l'insert à l'ouverture associée comme par exemple une couche de colle.

## Revendications

1. Ecran thermique pour dispositif de freinage d'au moins une roue d'aéronef, l'écran thermique étant destiné à être agencé entre un support d'actionneurs et un tube de couple dudit dispositif de freinage, l'écran thermique comprenant une platine (15) en un matériau thermiquement isolant, la platine comprenant au moins une ouverture (18) s'étendant de manière traversante entre deux faces principales de la platine, l'écran thermique étant **caractérisé en ce qu'**il comporte au moins un insert (20) agencé à l'intérieur de l'ouverture, l'insert ne dépassant pas de l'ouverture, l'insert étant dans un matériau plus rigide que celui de la platine, la platine (15) étant en résine phénolique.

2. Ecran thermique selon la revendication 1, dans lequel la platine comporte au moins deux ouvertures (18) s'étendant de manière traversante entre deux faces principales de la platine, un insert (20) étant agencé à l'intérieur de chacune des ouvertures, chaque insert ne dépassant pas de l'ouverture associé et étant dans un matériau plus rigide que celui de la platine.

3. Ecran thermique selon la revendication 1 ou 2, dans lequel l'insert (20) est entièrement agencé à l'intérieur de l'ouverture (18).

4. Ecran thermique selon l'une des revendications 1 à 3, comprenant en outre au moins une couche de matériau thermiquement isolant agencée dans l'ouverture (18) de sorte à venir recouvrir au moins partiellement au moins l'une des faces de l'insert (20).

5. Ecran thermique selon la revendication 4, dans lequel la couche de matériau thermiquement isolant est formée directement par une extension (22) de la platine.

6. Ecran thermique selon la revendication 4, dans lequel la couche de matériau thermiquement isolant est une pièce (23, 24) en matériau thermiquement isolant agencée dans l'ouverture.

7. Ecran thermique selon l'une des revendications précédentes, dans lequel au moins l'une des faces de l'insert (20) s'étend dans un même plan que l'une des faces de la platine (15).

8. Ecran thermique selon la revendication 7, dans lequel l'insert (20) a une épaisseur identique à celle de l'ouverture (18) .

9. Ecran thermique selon l'une des revendications précédentes, dans lequel l'insert (20) est conformé en une rondelle.

10. Dispositif de freinage d'au moins une roue d'aéronef comprenant un écran thermique selon l'une des revendications précédentes.

## Patentansprüche

1. Hitzeschild für eine Bremsvorrichtung von zumindest einem Luftfahrzeugrad, wobei der Hitzeschild dafür bestimmt ist, zwischen einem Aktuatorträger und einem Drehmomentrohr der Bremsvorrichtung angeordnet zu sein, wobei der Hitzeschild eine Platte (15) aus einem wärmeisolierenden Material umfasst, wobei die Platte zumindest eine Öffnung (18) umfasst, die sich als Durchgangsöffnung zwischen zwei Hauptflächen der Platte erstreckt, wobei der Hitzeschild **dadurch gekennzeichnet ist, dass** er zumindest einen Einsatz (20) enthält, der innerhalb der Öffnung angeordnet ist, wobei der Einsatz nicht aus der Öffnung herausragt, wobei der Einsatz aus einem Material besteht, das steifer ist als jenes der Platte, wobei die Platte (15) aus Phenolharz gefertigt ist.

2. Hitzeschild nach Anspruch 1, wobei die Platte zumindest zwei Öffnungen (18) enthält, die sich jeweils als Durchgangsöffnung zwischen zwei Hauptflächen der Platte erstrecken, wobei innerhalb einer jeden der Öffnungen jeweils ein Einsatz (20) angeordnet ist, wobei jeder Einsatz derart angeordnet ist, dass er nicht aus der jeweiligen Öffnung herausragt, und aus einem Material besteht, das steifer ist als jenes der Platte.

3. Hitzeschild nach Anspruch 1 oder 2, wobei der Einsatz (20) zur Gänze innerhalb der Öffnung (18) angeordnet ist.

4. Hitzeschild nach einem der Ansprüche 1 bis 3, ferner umfassend zumindest eine Schicht aus wärmeisolierendem Material, die derart in der Öffnung (18) angeordnet ist, dass sie mindestens eine der Seiten des Einsatzes (20) zumindest teilweise bedeckt.

5. Hitzeschild nach Anspruch 4, wobei die Schicht aus wärmeisolierendem Material direkt durch einen verlängerten Bereich (22) der Platte ausgebildet ist.

6. Hitzeschild nach Anspruch 4, wobei es sich bei der Schicht aus wärmeisolierendem Material um ein Teil (23, 24) aus wärmeisolierendem Material handelt, das in der Öffnung angeordnet ist.

7. Hitzeschild nach einem der vorhergehenden Ansprüche, wobei sich zumindest eine der Seiten des Einsatzes (20) in derselben Ebene erstreckt wie eine der Flächen der Platte (15).

8. Hitzeschild nach Anspruch 7, wobei der Einsatz (20) die gleiche Stärke aufweist wie die Öffnung (18).

9. Hitzeschild nach einem der vorhergehenden Ansprüche, wobei der Einsatz (20) scheibenförmig ausgebildet ist.

10. Bremsvorrichtung von zumindest einem Luftfahrzeugrad, umfassend einen Hitzeschild nach einem der vorhergehenden Ansprüche.

## Claims

1. Heat shield for a braking device of at least one aircraft wheel, the heat shield being intended to be arranged between an actuator support and a torque tube of said braking device, the heat shield comprising a plate (15) made of a thermally insulating material, the plate comprising at least one opening (18) extending therethrough between two main faces of the plate, the heat shield being **characterised in that** it comprises at least one insert (20) arranged inside the opening, the insert not protruding from the opening, the insert being made of a material which is more rigid than that of the plate, the plate (15) being made of phenolic resin.

2. Heat shield of claim 1, wherein the plate has at least two openings (18) extending therethrough between two main faces of the plate, an insert (20) being arranged within each of the openings, each insert not protruding from the associated opening and being made of a material which is more rigid than that of the plate.

3. Heat shield according to claims 1 or 2, wherein the insert (20) is entirely arranged within the opening (18).

4. Heat shield according to any one of claims 1 to 3, further comprising at least one layer of thermally insulating material arranged in the opening (18) so as to at least partially cover at least one of the faces of the insert (20).

5. Heat shield of claim 4, wherein the layer of thermally insulating material is formed directly by an extension (22) of the platen.

6. Heat shield according to claim 4, wherein the layer of thermally insulating material is a piece (23, 24) of thermally insulating material arranged in the aperture.

7. Heat shield according to any one of the preceding claims, wherein at least one of the faces of the insert (20) extends in a same plane as one of the faces of the plate (15) .

8. Heat shield according to claim 7, wherein the insert (20) has a thickness identical to that of the opening (18) .

9. Heat shield according to one of the preceding claims, wherein the insert (20) is shaped as a washer.

10. Braking device for at least one aircraft wheel comprising a heat shield according to any one of the preceding claims.
